# EUROPEAN PATENT APPLICATION

(11) **EP 3 923 020 A1**
(43) Date of publication of application: **15.12.2021**
(21) Application number: 20753184.9
(22) Date of filing: 06.02.2020
(51) Int. Cl.: G01S 7/03, G01S 13/931, H01Q 1/42, H01Q 15/08, H01Q 19/08

(54) **RADAR DEVICE**

(30) Priority: 06.02.2019 JP 2019020054
(71) Applicant: Hitachi Astemo, Ltd., Hitachinaka-shi Ibaraki 312-8503 (JP)
(72) Inventor: CHUJO, Norio, Tokyo 100-8280 (JP); NAGAISHI, Hideyuki, Tokyo 100-8280 (JP); MATSUMURA, Takafumi, Hitachinaka-shi, Ibaraki 312-8503 (JP); OSAKA, Hideki, Hitachinaka-shi, Ibaraki 312-8503 (JP); KURODA, Hiroshi, Hitachinaka-shi, Ibaraki 312-8503 (JP)
(74) Representative: MERH-IP Matias Erny Reichl Hoffmann Patentanwälte PartG mbB
(86) International application number: PCT/JP2020/004689
(87) International publication number: WO 2020/162577

(57) **Abstract**

A radar device comprises: a transmission antenna for emitting radio waves toward an object; a reception antenna for receiving reflected waves formed by the radio waves emitted from the transmission antenna being reflected by the object; and a radome for covering the transmission antenna and the reception antenna, the radome having a plurality of depressions of mutually different sizes at a position that corresponds to the transmission antenna.

## Description

### Technical Field

The present invention relates to a radar device.

### Background Art

In recent years, in order to achieve driver support and autonomous driving, a radar device that detects the surroundings of an automobile has been adopted. Such a radar device generally emits a radio wave from a transmission antenna, receives the radio wave reflected by a target by a reception antenna provided separately from the transmission antenna, and calculates a position and speed of the target.

In a radar device for an automobile, since it is necessary to widely sense the surroundings of the automobile, a viewing angle is required to be as wide as possible. However, when an irradiation range of the radio wave from the transmission antenna is expanded to widen the viewing angle, a part of the radio wave may be reflected by a cover (radome) installed to protect the antenna and be incident on the reception antenna. Such reflected waves from other than the target lead to deterioration of detection performance of the target in the radar device. Therefore, in a radar device for an automobile, it is required to achieve both widening of the viewing angle and reduction of reflected waves from other than the target.

As a background art related to the above, for example, the following PTL 1 is known. PTL 1 discloses a technique in which a cover member covering a transmission antenna unit and a reception antenna unit in a radar device have a front surface and a reverse surface that are not parallel to suppress an influence of reflection from the cover member.

### Citation List

### Patent Literature

PTL 1: JP 2016-125883 A

### Summary of Invention

### Technical Problem

In the technique of PTL 1, it is possible to reduce the reflected wave from the cover member, but the effect of widening the viewing angle cannot be obtained. It is therefore difficult to achieve both widening of the viewing angle and reduction of reflected waves from other than the target.

### Solution to Problem

A radar device of the present invention includes a transmission antenna configured to emit a radio wave toward an object, a reception antenna configured to receive a reflected wave of the radio wave emitted from the transmission antenna and reflected by the object, and a radome covering the transmission antenna and the reception antenna, in which the radome includes a plurality of depressions having different sizes from each other at a position corresponding to the transmission antenna.

### Advantageous Effects of Invention

The present invention can achieve both widening of the viewing angle and reduction of reflected waves from other than the target.

### Brief Description of Drawings

[FIG. 1] FIG. 1 is a diagram of a radar device according to a first embodiment of the present invention.
[FIG. 2] FIG. 2 is a diagram illustrating an example of mounting a radar device on an automobile.
[FIG. 3] FIG. 3 is a diagram illustrating an antenna gain in the radar device according to the first embodiment of the present invention.
[FIG. 4] FIG. 4 is a diagram of a radar device according to a comparative example.
[FIG. 5] FIG. 5 is a diagram illustrating an antenna gain in the radar device according to the comparative example.
[FIG. 6] FIG. 6 is a diagram of a radar device according to a second embodiment of the present invention.
[FIG. 7] FIG. 7 is a diagram of a radar device according to a third embodiment of the present invention.
[FIG. 8] FIG. 8 is a diagram of a radar device according to a fourth embodiment of the present invention.
[FIG. 9] FIG. 9 is a diagram of a radar device according to a fifth embodiment of the present invention.

### Description of Embodiments

Hereinafter, embodiments of the present invention will be described with reference to the drawings. The following description and drawings are examples for describing the present invention, and are omitted and simplified as appropriate to clarify the description. The present invention can be carried out in various other forms. Unless otherwise specified, each component may be single or multiple.

Positions, sizes, shapes, ranges, and the like of the components illustrated in the drawings may not represent actual positions, sizes, shapes, ranges, and the like in order to facilitate understanding of the invention. Therefore, the present invention is not limited to the positions, sizes, shapes, ranges, and the like disclosed in the drawings.

In a case where there are a plurality of components having the same or similar functions, the same reference signs may be attached with different subscripts in the description. However, in a case where the plurality of components do not have to be distinguished, the subscripts may be omitted in the description.

Hereinafter, a radar device according to the embodiments of the present invention will be described with reference to the drawings.

### (First embodiment)

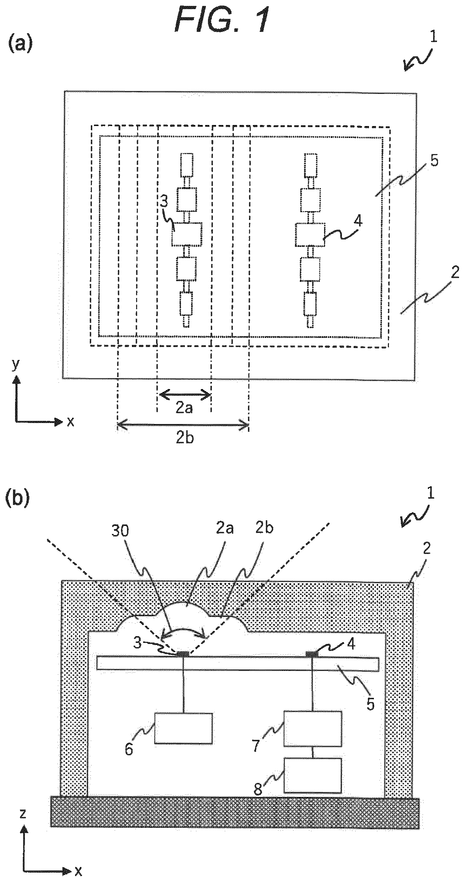

FIG. 1 is a diagram of a radar device 1 according to a first embodiment of the present invention. FIG. 1(a) is a plan perspective view of the radar device 1 according to this embodiment, and FIG. 1(b) is a sectional view of the radar device 1 according to this embodiment. As illustrated in FIG. 1, in the radar device 1 according to this embodiment, a transmission antenna 3 and a reception antenna 4 are mounted on an antenna substrate 5. The transmission antenna 3 emits a radio wave toward a target object, and the reception antenna 4 receives a reflected wave of the radio wave emitted from the transmission antenna 3 and reflected by the target object. For example, as illustrated in FIG. 1(a), each of the transmission antenna 3 and the reception antenna 4 is configured by an array antenna in which a plurality of antenna elements are linearly arranged. Note that the transmission antenna 3 and the reception antenna 4 may be configured using antennas other than the array antenna.

A transmission circuit 6 that transmits a modulated signal to the transmission antenna 3 and causes the transmission antenna 3 to emit a radio wave is connected to the transmission antenna 3. A reception circuit 7 that amplifies and demodulates the reflected wave from the target received by the reception antenna 4 to generate a reception signal and a signal processing circuit 8 that calculates a position and speed of the target from the reception signal are connected to the reception antenna 4.

Further, in the radar device 1 according to this embodiment, a cover (radome) 2 for protecting the transmission antenna 3 and the reception antenna 4 is installed so as to cover the transmission antenna 3 and the reception antenna 4. The radome 2 is constituted with a material that transmits radio waves, such as resin. Note that, FIG. 1(a) illustrates the transmission antenna 3, the reception antenna 4, and the antenna substrate 5 by transmitting a part of the radome 2 to reveal an internal structure of the radar device 1.

The radome 2 has a first depression 2a and a second depression 2b having different sizes at a position corresponding to the transmission antenna 3, that is, a position immediately above the transmission antenna 3. As illustrated in FIG. 1(a), the first depression 2a and the second depression 2b are formed along a longitudinal direction of the transmission antenna 3. As illustrated in FIG. 1(b), the second depression 2b is larger than the first depression 2a, and the second depression 2b partially overlaps the first depression 2a along a z-axis direction in which the transmission antenna 3 emits the radio wave. In this embodiment, both the first depression 2a and the second depression 2b are provided on an inner surface of the radome 2, that is, a surface on a side corresponding to the transmission antenna 3 and the reception antenna 4. Thus, the first depression 2a is formed to overlap the second depression 2b, and there is a step between the first depression 2a and the second depression 2b. Note that an outer surface of the radome 2, that is, a surface on a side where the first depression 2a and the second depression 2b are not provided is a flat surface in this embodiment.

In FIG. 1(b), assuming that a viewing angle of the radar device 1 by the transmission antenna 3 is in a range indicated by the reference sign 30, a width of the first depression 2a is preferably disposed within the range of the viewing angle 30. Note that the viewing angle 30 is a range in which the signal processing circuit 8 can detect the target object based on the reception signal in the radar device 1, and is determined in accordance with gains of the transmission antenna 3 and the reception antenna 4, a magnitude of a signal output from the transmission circuit 6 to the transmission antenna 3, and the like. On the other hand, it is preferable that the width of the second depression 2b is disposed in a range equal to or wider than the range of the viewing angle 30. In a case where the width of the second depression 2b is set to a range wider than the viewing angle 30, as illustrated in FIG. 1(b), the second depression 2b has a region outside the range of the viewing angle 30.

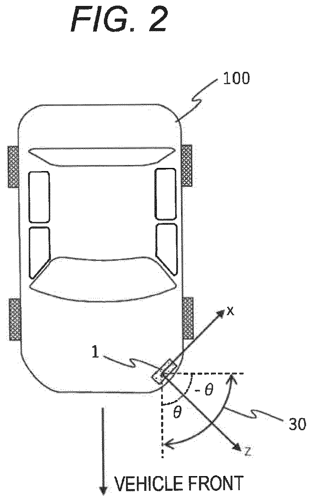

FIG. 2 is a diagram illustrating an example of mounting the radar device 1 on an automobile. In order to detect an obstacle or the like existing in left front of a vehicle 100 as an automobile, the radar device 1 is mounted with the z axis facing a left diagonal front direction of the vehicle 100, for example, at a position illustrated in FIG. 2. Thus, for example, assuming that the angle of the viewing angle 30 is 2θ, objects existing within an angle range of θ on the left and right with the left front of the vehicle 100 as a center are detected by the radar device 1.

Note that FIG. 2 illustrates an example of a mounting position of the radar device 1 in the vehicle 100, and the radar device 1 may be mounted at another position. Further, a plurality of the radar devices 1 may be mounted at different positions in the vehicle 100.

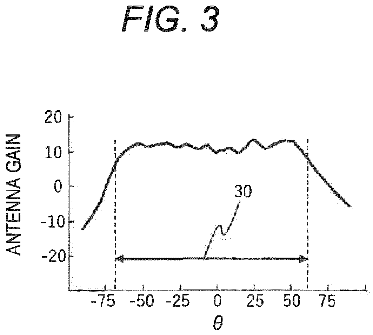

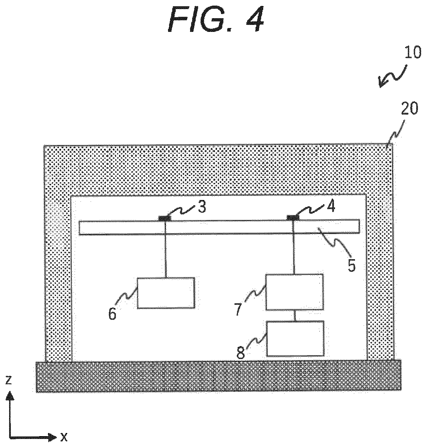

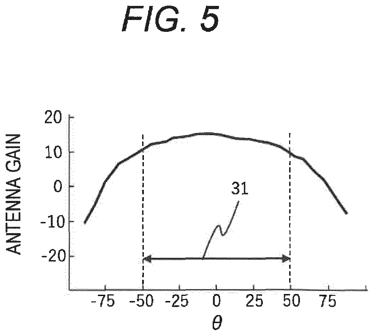

Next, effects of the first depression 2a and the second depression 2b in the radome 2 will be described. FIG. 3 is a diagram illustrating an electromagnetic field analysis result of an antenna gain in the radar device 1 according to the first embodiment of the present invention. FIG. 4 is a sectional view of a radar device 10 according to a comparative example, and FIG. 5 is a diagram illustrating an electromagnetic field analysis result of an antenna gain in the radar device 10 according to the comparative example. In the comparative example illustrated in FIG. 4, in the radar device 10, a radome 20 is not provided with a depression, and both an inner surface and an outer surface of the radome 20 are flat surfaces. The other points have a similar structure to the radar device 1 illustrated in FIG. 1.

In the radar device 10 of the comparative example illustrated in FIG. 4, since the radome 20 is not provided with a depression, the radio wave emitted from the transmission antenna 3 has a strong electric field distribution around 0° corresponding to a normal direction of an antenna surface. As a result, the antenna gain when the transmission antenna 3 is combined with the radome 20 of the comparative example has a shape that gradually decreases with a vicinity of 0° as a peak, as illustrated in FIG. 5. A viewing angle 31 of the radar device 10 due to this antenna gain is about ±50°.

On the other hand, in the radar device 1 according to this embodiment illustrated in FIG. 1, the first depression 2a provided in the radome 2 functions as a concave lens for the radio wave emitted from the transmission antenna 3. Due to the effect of the concave lens, the radio wave emitted from the transmission antenna 3 is dispersed from the normal direction of the antenna surface toward a periphery, and a strong electric field distribution is obtained around the first depression 2a. As a result, the antenna gain when the transmission antenna 3 is combined with the radome 2 according to this embodiment has a trapezoidal shape spreading in a wide angle direction around 0° as illustrated in FIG. 3. As compared with the antenna gain of the conventional example illustrated in FIG. 5, the gain increases by about 2 dB to 3 dB in regions of -50° or less and +50° or more. The viewing angle 30 of the radar device 1 due to the antenna gain is about ±70°, which is larger than about ±50° of the comparative example.

Further, in the radar device 10 of the comparative example, since the radome 20 is not provided with the depression, a part of the radio wave emitted from the transmission antenna 3 is reflected by the radome 20, and a strong electric field distribution is generated near the reception antenna 4. The reflected wave from the radome 20 mixes with the reflected wave from the target and is received by the reception antenna 4, and thus detection performance is deteriorated in the radar device 10 of the comparative example.

On the other hand, in the radar device 1 according to this embodiment, due to the second depression 2b provided in the radome 2, an incident angle from the transmission antenna 3 to the radome 2 outside the viewing angle 30 is smaller than an incident angle in a case where the second depression 2b is not provided, and accordingly, a reflection coefficient is also smaller. It is therefore possible to prevent the radio wave emitted from the transmission antenna 3 from being reflected toward the reception antenna 4, and to prevent a strong electric field distribution from occurring near the reception antenna 4.

As described above, in the radar device 1 according to this embodiment, by providing the first depression 2a and the second depression 2b in the radome 2, the viewing angle can be widened, and also, reflected waves from other than the target can be reduced.

In the first embodiment of the present invention described above, the following effects are achieved.
(1) The radar device 1 includes the transmission antenna 3 that emits a radio wave toward a target object, the reception antenna 4 that receives a reflected wave of the radio wave emitted from the transmission antenna 3 and reflected by the object, and the radome 2 covering the transmission antenna 3 and the reception antenna 4. The radome 2 has a plurality of depressions having different sizes at positions corresponding to the transmission antenna 3. This configuration can achieve both widening of the viewing angle and reduction of reflected waves from other than the target.
(2) The depressions of the radome 2 include the first depression 2a and the second depression 2b larger than the first depression 2a. The second depression 2b partially overlaps the first depression 2a along the direction in which the transmission antenna 3 emits radio waves. This configuration makes it possible to arrange the first depression 2a and the second depression 2b at appropriate positions of appropriate sizes.
(3) The radar device 1 further includes the signal processing circuit 8 that detects the target object based on the reflected wave received by the reception antenna 4. The first depression 2a is preferably disposed within the range of the viewing angle 30 at which the object is detectable by the signal processing circuit 8, and the second depression 2b preferably has a region outside the range of the viewing angle 30. In this way, the first depression 2a functions as a concave lens with respect to the radio wave emitted from the transmission antenna 3, the viewing angle can be effectively expanded. In addition, the radio wave emitted from the transmission antenna 3 is prevented from being reflected toward the reception antenna 4 by the second depression 2b, and the reflected waves from other than the target can be effectively reduced.

### (Second embodiment)

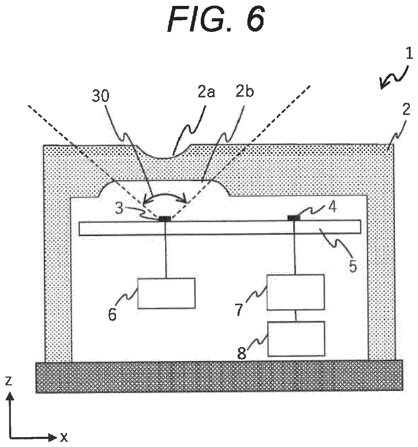

FIG. 6 is a sectional view of the radar device 1 according to a second embodiment of the present invention. In the radar device 1 according to this embodiment, the first depression 2a is provided not on the inner surface of the radome 2 but on the opposite outer surface. The other points have a similar structure to the radar device 1 according to the first embodiment illustrated in FIG. 1.

In the radar device 1 according to this embodiment, as the first embodiment, the first depression 2a provided in the radome 2 functions as a concave lens for the radio wave emitted from the transmission antenna 3. This can widen the viewing angle 30. Further, the second depression 2b provided in the radome 2 prevents the radio wave emitted from the transmission antenna 3 from being reflected toward the reception antenna 4. Therefore, reflected waves from other than the target can be reduced.

### (Third embodiment)

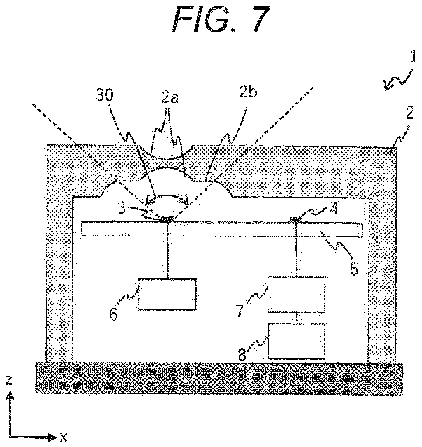

FIG. 7 is a sectional view of the radar device 1 according to a third embodiment of the present invention. In the radar device 1 according to this embodiment, the first depression 2a is provided on each of the inner surface and the outer surface of the radome 2. Curvatures of these two first depressions 2a may be the same or different. The other points have a similar structure to the radar device 1 according to the first embodiment illustrated in FIG. 1.

In the radar device 1 according to this embodiment, as in the first embodiment, the two first depressions 2a provided on the inner surface and the outer surface of the radome 2 function as concave lenses for radio waves emitted from the transmission antenna 3. Thus, the effect of the concave lenses can be further enhanced, and the viewing angle 30 can be widened. Further, the second depression 2b provided in the radome 2 prevents the radio wave emitted from the transmission antenna 3 from being reflected toward the reception antenna 4. Therefore, reflected waves from other than the target can be reduced.

### (Fourth embodiment)

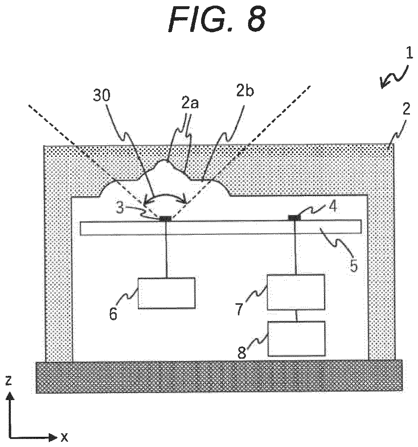

FIG. 8 is a sectional view of the radar device 1 according to a fourth embodiment of the present invention. In the radar device 1 according to this embodiment, two first depressions 2a having different sizes and curvatures are provided to overlap the inner surface of the radome 2. The other points have a similar structure to the radar device 1 according to the first embodiment illustrated in FIG. 1.

In the radar device 1 according to this embodiment, as in the first embodiment, the two first depressions 2a provided on the inner surface of the radome 2 function as concave lenses for radio waves emitted from the transmission antenna 3. Thus, the effect of the concave lenses can be further enhanced, and the viewing angle 30 can be widened. Further, the second depression 2b provided in the radome 2 prevents the radio wave emitted from the transmission antenna 3 from being reflected toward the reception antenna 4. Therefore, reflected waves from other than the target can be reduced.

In the second to fourth embodiments of the present invention described above, similar effects to the effects of the first embodiment are obtained.

In the third embodiment, the first depressions 2a are provided on the inner surface and the outer surface of the radome 2. In the fourth embodiment, the example in which the two first depressions 2a are provided on the inner surface of the radome 2 has been described. However, the two first depressions 2a may be provided on the outer surface of the radome 2, or three or more first depressions 2a may be provided. If the plurality of first depressions 2a are provided on at least one of the inner surface or the outer surface of the radome 2, as described in the third and fourth embodiments, the effect of the concave lenses can be further enhanced to widen the viewing angle 30.

### (Fifth embodiment)

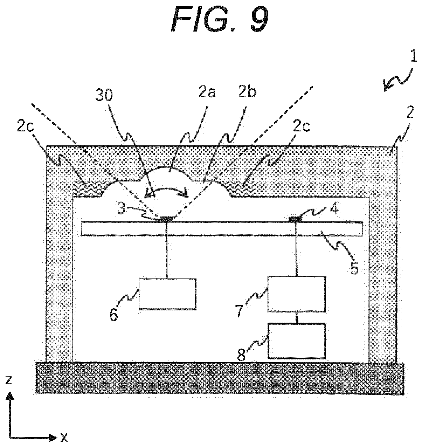

FIG. 9 is a sectional view of the radar device 1 according to a fifth embodiment of the present invention. In the radar device 1 according to this embodiment, the radome 2 has a low conductive part 2c including a material having lower conductivity than other regions (regions within the range of the viewing angle 30) in a region outside the range of the viewing angle 30 of the second depression 2b. The other points have a similar structure to the radar device 1 according to the first embodiment illustrated in FIG. 1.

In the radar device 1 according to this embodiment, since a part of the radio waves emitted from the transmission antenna 3, outside the range of the viewing angle 30 is absorbed by the low conductive part 2c, unnecessary radio waves are further prevented from being reflected toward the reception antenna 4. It is therefore possible to further reduce the reflected waves from other than the target while the viewing angle is widened.

In the example in FIG. 9, the low conductive part 2c is provided in the radome 2 having the first depression 2a and the second depression 2b similar to those of the first embodiment. However, in the radome 2 having the first depression 2a and the second depression 2b similar to those in the second to fourth embodiments shown in FIG. 6 to 8, the low conductive part 2c may be provided in a region outside the range of the viewing angle 30 of the second depression 2b. In this case, it is also possible to prevent unnecessary radio waves deviating from the viewing angle 30 from being reflected toward the reception antenna 4 and to further reduce reflected waves from other than the target.

In the fifth embodiment of the present invention described above, similar effects to the effects of the first embodiment are achieved, and reflected waves from other than the target can be further reduced.

In each of the first to fifth embodiments, an example been described in which the first depression 2a and the second depression 2b each have a curved surface, but the first depression 2a and the second depression 2b may be each configured by a plurality of flat surfaces. Further, the transmission antenna 3 and the reception antenna 4 may be each configured by a plurality of antennas.

The embodiments and various modifications described above are merely examples, and the present invention is not limited to these contents as long as the characteristics of the invention are not impaired. Although various embodiments and modifications have been described above, the present invention is not limited to these contents. Other aspects conceivable within the scope of the technical idea of the present invention are also included within the scope of the present invention.

The disclosure of the following priority application is incorporated herein by reference.

Japanese Patent Application No. 2019-20054 (filed on February 6, 2019).

### Reference Signs List

- 1: radar device
- 2: cover (radome)
- 2a: first depression
- 2b: second depression
- 3: transmission antenna
- 4: reception antenna
- 5: antenna substrate
- 6: transmission circuit
- 7: reception circuit
- 8: signal processing circuit

## Claims

1. A radar device comprising:
a transmission antenna configured to emit a radio wave toward an object;
a reception antenna configured to receive a reflected wave of the radio wave emitted from the transmission antenna and reflected by the object; and
a radome covering the transmission antenna and the reception antenna,
wherein the radome includes a plurality of depressions having different sizes from each other at a position corresponding to the transmission antenna.

2. The radar device according to claim 1, wherein
the plurality of depressions include a first depression and a second depression that is larger than the first depression, and
the second depression partially overlaps the first depression along a direction in which the transmission antenna emits the radio wave.

3. The radar device according to claim 2, further comprising a signal processing circuit that detects the object based on the reflected wave received by the reception antenna,
wherein the first depression is disposed within a range of a viewing angle at which the object is detectable by the signal processing circuit, and
the second depression has a region outside the range of the viewing angle.

4. The radar device according to claim 3, wherein in the region outside the range of the viewing angle of the second depression, the radome has lower conductivity than in a region within the range of the viewing angle.

5. The radar device according to any one of claims 2 to 4, wherein
the radome has an inner surface facing the transmission antenna and the reception antenna and an outer surface opposite to the inner surface, and
the first depression and the second depression are provided on the inner surface.

6. The radar device according to any one of claims 2 to 4, wherein
the radome has an inner surface facing the transmission antenna and the reception antenna and an outer surface opposite to the inner surface,
the second depression is provided on the inner surface, and
the first depression is provided on the outer surface.

7. The radar device according to any one of claims 2 to 4, wherein
the radome has an inner surface facing the transmission antenna and the reception antenna and an outer surface opposite to the inner surface,
the radome includes a plurality of the first depressions, the second depression is provided on the inner surface, and
the plurality of first depressions are provided on at least one of the inner surface or the outer surface.
